# EUROPÄISCHE PATENTSCHRIFT

(11) **EP 3 592 489 B1**
(45) Veröffentlichungstag und Bekanntmachung des Hinweises auf die Patenterteilung: **14.04.2021**
(21) Anmeldenummer: 18707908.2
(22) Anmeldetag: 27.02.2018
(51) Int. Cl.: F16C 19/54, B23B 49/00, B23B 51/10

(54) **ANSCHLAG FÜR EIN BOHR-, FRÄS- ODER SENKWERKZEUG**
STOP FOR A DRILLING, MILLING OR COUNTERSINKING TOOL
BUTÉE DESTINÉE À UN OUTIL DE PERÇAGE, DE FRAISAGE OU DE LAMAGE

(30) Priorität: 08.03.2017 DE 102017104914
(43) Veröffentlichungstag der Anmeldung: 15.01.2020
(73) Patentinhaber: Gühring KG, 72458 Albstadt (DE)
(72) Erfinder: VON PUTTKAMMER, Ingo, 72469 Meßstetten (DE); REBHOLZ, Felix, 72510 Stetten-Frohnstetten (DE)
(74) Vertreter: Gleim, Christian Ragnar
(86) Internationale Anmeldenummer: PCT/EP2018/054781
(87) Internationale Veröffentlichungsnummer: WO 2018/162280

(56) Entgegenhaltungen:
- WO-A1-2016/023944
- GB-A- 554 343

## Beschreibung

Die Erfindung betrifft einen Anschlag gemäß dem Oberbegriff des Anspruchs 1 für ein rotierendes Bohr-, Fräs- oder Senkwerkzeug sowie ein Werkzeug gemäß dem Oberbegriff des Anspruchs 9, an dessen Werkzeugschaft ein Anschlag befestigt ist.

### STAND DER TECHNIK

Aus dem Stand der Technik sind Anschläge für Bohr-, Fräs- oder Senkwerkzeuge bekannt, die als sogenannte "Microstop"-Adapter bezeichnet werden. Diese Adapter umfassen in der Regel einen Bohrschaft zur Aufnahme in ein Spannfutter einer Drehmaschine oder eines handgehaltenen Drehwerkzeugs und ein Lager, mit denen eine Anschlaghülse sich frei um einen in den Adapter eingesetzten Bohr-, Fräs- oder Senkkopf drehen kann, so dass bei Erreichen einer vorgegebenen Eindringtiefe in ein Bauteil die Anschlaghülse auf der Oberfläche des Bauteils aufsetzen kann, und sich der Bohr-, Fräs-, oder Senkkopf frei drehen kann. Derartige Anschläge werden insbesondere für Senk- oder Fräsarbeiten im Fahrzeug- und Flugzeugbau eingesetzt.

Der Bohrschaft derartiger Microstop-Adapter wird im Gebrauch in ein Spannfutter eines Bohrwerkzeugs, beispielsweise einer Bohrmaschine, oder eines Fräswerkzeugs aufgenommen. Die Anschlaghülse kann mit einem axialen Verstellgewinde versehen sein, womit die Längsposition der Anschlaghülse relativ zum Werkzeugkopf verstellt und somit die Anschlagtiefe eingestellt werden kann. Der Adapter weist eine Aufnahme, beispielsweise ein Schraubgewinde, einen Bajonettverschluss oder eine Schnellspanneinrichtung zur Aufnahme des Bohr-, Fräs- oder Senkkopfs auf, um diesen zentrisch in der Anschlaghülse zu lagern. Somit umfassen bekannte Microstop-Adapter einen Bohrschaft und die frei drehbar gelagerte Anschlaghülse, und der Werkzeugkopf kann nach Bedarf ausgewechselt werden. Somit wird ein Anschlagadapter mit Bohrschaft bereitgestellt, in dem ein Spanbearbeitungswerkzeugkopf zur rotierenden Spanbearbeitung eingesetzt werden kann.

Aus der DE 101 54 434 B4 geht eine Anschlagvorrichtung mit Werkzeugschaft hervor, die eine frei drehbare Anschlaghülse umfasst, die um einen Werkzeugschaft der Anschlagvorrichtung mittels eines einzigen Drehlagers verdrehbar ist. Ein Bohr- oder Fräswerkzeug kann in den Werkzeugschaft der Anschlagvorrichtung eingesetzt und drehfest arretiert werden.

Die GB 4 882 42 A offenbart einen Anschlagadapter, der eine Anschlaghülse mit Spindelschaft umfasst, an dem die Anschlaghülse drehbar gelagert ist, und in der ein Werkzeug, beispielsweise ein Senkwerkzeugbit eingesetzt werden kann. Somit handelt es sich um einen gattungsgemäßen, vorgenannten Microstop-Adapter, der nicht nachträglich an ein spanabhebendes Werkzeug mit Schaft aufgebracht werden kann.

In der US 7 607 871 B1 und in der GB 22 693 33 A sind weitere gattungsgemäße Mikrostop-Adapter Anschlaghülsen mit Adapteraufnahmen für ein speziell dafür vorgesehenes Werkzeugbit vorgesehen.

In der DE 10 2008 022 968 A1 sind wiederum mehrere Ausführungsformen von Microstop-Adaptern dargestellt, wobei auch ein Werkzeug mit einem Werkzeugschaft dargestellt ist, bei dem der Werkzeugschaft einen Gewindeabschnitt trägt, auf dem eine Stellhülse aufgeschraubt und mittels einer Inbusschraube lagefixiert werden kann. Die Stellhülse weist einen Rastring auf, auf dem eine Anschlaghülse reibschlüssig mit der Stellhülse aufgerastet und drehmitgeschleppt werden kann. Der Werkzeugschaft des Werkzeugs muss einen entsprechenden Gewindeabschnitt aufweisen, um die Anschlaghülse befestigen zu können.

Bei den bekannten Microstop-Adaptern ergibt sich das Problem, dass durch das auswechselbare Einsetzen des Werkzeugkopfs in die Adapteraufnahme ein schlechter Rundlauf des Werkzeugkopfs und damit eine minderwertige Bohrung, Senkung oder Fräsbearbeitung auftreten kann. Des Weiteren kann bei einer Fehlaufnahme bzw. einem Aufnahmespiel zwischen Adapter und Werkzeugkopf nicht nur der Rundlauf, sondern auch die Winkellage des Werkzeugkopfs in der Bohrungsvertiefung ungünstig verändert werden, so dass eine Bearbeitungsqualität herabgesetzt wird. Abhängig davon, in welche Richtung ein Werker Druck auf das Werkzeug ausübt, können unterschiedliche Arbeitsergebnisse entstehen.

In der WO 2016/023944 A1 wird ein verbesserter Anschlag für ein rotierendes Bohr-, Fräs- oder Senkwerkzeug beschrieben, der eine mit einem Gleit- oder Wälzlager um das Werkzeug frei drehbar gekoppelte Anschlaghülse umfasst. Eine erste Lagerbuchse des Lagers trägt die Anschlaghülse. Eine zweite Lagerbuchse des Lagers sitzt drehfest auf einer Schafthülse. Die Schafthülse ist auf einem Schaft des Werkzeugs aufschiebbar und befestigbar. Insbesondere offenbart WO 2016/023944 A1 einen Anschlag gemäß dem Oberbegriff des Anspruchs 1.

In der DE 552 110 A wird ein Werkzeug mit Tiefenanschlag zum Aussenken von Löchern für Versenkschrauben dargestellt. Ein mit einem Morsekonus o. dgl. versehene Bohrerkörper hat eine axiale Bohrung zur Aufnahme des Senkerschaftes und daran anschließend eine zweckmäßig etwas kleinere Bohrung für die Vordrückfeder. Auf dem Außengewinde des Bohrerkörpers sitzt ein Versenkanschlag, der aus einem festen Körper und dem in ihm auf Kugellagern ruhenden Versenkanschlagring besteht. Die Form, Anordnung und Anzahl der Kugellager richtet sich nach der Größe und der Umfangsgeschwindigkeit des Senkers, wobei ein Schrägkugellager dargestellt ist.

Ausgehend von dem oben dargestellten Problem ergibt sich die Aufgabe, einen Anschlag für ein Bohr-, Senk- oder Fräswerkzeug auszubilden, der einen verbesserten Rundlauf, eine präziser definierte Aufsetzwinkellage für die spannende Bearbeitung und eine verbesserte Begrenzung der Eintauchtiefe ermöglicht, und somit die vorgenannten Nachteile des Stands der Technik überwindet.

Diese Aufgabe wird durch einen Anschlag mit den Merkmalen des Anspruchs 1 gelöst. Vorteilhafte Weiterentwicklungen der Erfindung sind Gegenstand der Unteransprüche.

### OFFENBARUNG DER ERFINDUNG

In einem ersten erfindungsgemäßen Aspekt wird ein Anschlag für ein rotierendes Bohr-, Fräs- oder Senkwerkzeug vorgeschlagen, wobei eine mit einem Radialwälzlager, insbesondere einem Radialkugellager, um das Werkzeug frei drehbar gekoppelte Anschlaghülse vorgesehen ist, und wobei eine äußere Lagerbuchse des Radialwälzlagers an der Anschlaghülse und eine innere Lagerbuchse des Lagers an einer Schafthülse, welche auf einem Werkzeugschaft des Werkzeugs befestigbar ist, befestigt sind. Es wird vorgeschlagen, dass zusätzlich ein Axialwälzlager, insbesondere ein Axialkugellager vorgesehen ist, wobei eine Gehäusescheibe des Axialwälzlagers an der Anschlaghülse und eine Wellenscheibe des Axialwälzlagers an der Schafthülse abgestützt ist.

Mit anderen Worten wird ein Anschlag vorgeschlagen, der unmittelbar auf einen Schaft eines einstückigen Bohr-, Fräs- oder Senkwerkzeugs aufgeschoben und befestigt werden kann. Die Schafthülse koppelt die Anschlaghülse sowohl über ein Radialwälzlager als auch über ein Axialwälzlager mit dem Werkzeugschaft eines in die Schafthülse einsetzbaren Rotationswerkzeugs, wobei das Abstützen des Axialwälzlagers an der Schafthülse bzw. an der Anschlaghülse sowohl direkt als auch indirekt über ggf. vorhandene Zwischenelemente erfolgen kann. Die Schafthülse kann drehfest an einer axialen Position des Werkzeugschafts befestigt werden. Die Position der Schafthülse am Werkzeugschaft und die Position der Anschlaghülse an der Lagerbuchse definieren die Eintauchtiefe des Werkzeugs, bis zu der die Anschlaghülse auf einer Oberfläche eines zu bearbeitenden Werkstücks aufsetzt. Wird eine hierdurch festgelegte Eintauchtiefe erreicht, sitzt ein stirnseitiger Anschlagring der Anschlaghülse auf der Werkzeugoberfläche auf, während sich das Werkzeug im Inneren frei mit der Schafthülse dreht, und die Anschlaghülse aufgrund der Wälzlagerkopplung mit dem Anschlagring auf der Bauteiloberfläche ruhen kann.

Der Schaft des Werkzeugs kann unmittelbar in ein Spannfutter einer Drehmaschine oder einer Bohrmaschine eingespannt werden, so dass ein optimaler Rundlauf gewährleistet ist. Der Ansetzwinkel des Werkzeugs kann optimal gewählt werden, wobei die Anschlaghülse keine mittelbare Verbindung zwischen Werkzeugkopf und antreibendem Bohrwerkzeug bildet, sondern lediglich auf dem Schaft des Werkzeugs aufsetzt. Der Tiefenanschlag wird durch die Position der Schafthülse auf dem Bohrschaft sowie die relative axiale Position der frei drehbaren Anschlaghülse zur Schafthülse definiert. Beliebige Drehwerkzeuge können mit einem erfindungsgemäßen Anschlag nachgerüstet werden.

Gegenüber einem aus dem Stand der Technik bekannten Anschlag, der lediglich ein oder mehrere Radialwälzlager aufweist, ist das Lagerspiel durch die zusätzliche Verwendung eines Axialwälzlagers in axialer Richtung deutlich reduziert. Dadurch lassen sich Bohrungen, Fräsungen oder Senkungen mit einer höheren Präzision und Wiederholungsgenauigkeit bezüglich der Eintauchtiefe herstellen.

Mittels des Anschlags ist es möglich, Standardwerkzeuge mit einem Tiefenanschlag nachzurüsten, und so an den Vorteil der Erfindung zu gelangen.

Vorteilhafterweise kann das Axialwälzlager axial beabstandet zu dem Radialwälzlager angeordnet sein. Dadurch wird der Rundlauf des Anschlags verbessert und eine definierte Aufsetzwinkellage erzielt. Durch den Abstand zwischen beiden Wälzlagern kann die Anschlaghülse axial zentriert gegenüber der Schafthülse und somit gegenüber dem Werkzeugschaft des Werkzeugs ausgerichtet werden, so dass bei Erreichen des Anschlagpunktes die Winkellage vom Anschlag gegenüber Werkzeugachse präzise definiert ist. Dies verbessert die Genauigkeit des Tiefenanschlags sowie der Winkellage des Bohr- oder Fräswerkzeugs bei Erreichen der vorgegebenen Anschlagtiefe.

In einer vorteilhaften Weiterbildung kann das Axialwälzlager in axialer Richtung betrachtet auf der einem Werkzeugkopf des Werkzeugs abgewandten Seite des Radialwälzlagers angeordnet sein. Somit befindet sich das Radialwälzlager auf einer dem Werkzeugkopf bzw. dem Werkstück zugewandten Seite des Anschlags. Hierdurch wird die Führung der Anschlaghülse weiter verbessert.

In einer vorteilhaften Weiterbildung kann auf einem Lagerspanngewinde der Schafthülse eine Lagerspannschraube angeordnet sein, wobei das Radialwälzlager und das Axialwälzlager derart angeordnet sind, dass durch ein Verstellen der Lagerspannschraube beide Wälzlager gemeinsam verspannt werden können. Dies ermöglicht eine einfache Montage der Lager und erleichtert ein ggf. erforderliches Nachstellen des Lagerspiels. Die Lagerspannschraube kann auf einem Außengewinde der Schafthülse als Lagerspanngewinde angeordnet sein und kann ein axiales Spiel des Lagers reduzieren, so dass unter anderem auch eine Drehhemmung der Anschlaghülse gegenüber der Schafthülse einstellbar ist.

In dem Zusammenhang hat es sich als vorteilhaft erwiesen, wenn die Anschlaghülse eine axial wirkende Spannfläche für die Gehäusescheibe und die Lagerspannschraube eine axial wirkende Spannfläche für die Wellenscheibe aufweisen, wobei beide Spannflächen einander zugewandt sind. Hierdurch wird eine optimale, möglichst spielfreie Kraftübertragung von axial auf das Axialwälzlager einwirkenden Kräften, die beim Aufsetzen der Anschlaghülse auf das zu bearbeitende Werkstück entstehen, auf die Schafthülse und damit auf das Werkzeug erzielt.

Vorteilhafterweise kann die Anschlaghülse eine axial wirkende Spannfläche für die äußere Lagerbuchse und die Schafthülse eine axial wirkende Spannfläche für die innere Lagerbuchse aufweisen, wobei beide Spannflächen einander zugewandt sind. Die Kombination dieser beiden Spannflächen bildet insbesondere eine Gegenlagerung für die durch die Lagerspannschraube ausgeübten Kräfte. Die an der Schafthülse vorgesehene Spannfläche weist sinnvollerweise in Richtung der Spannfläche der Lagerspannschraube, so dass die beiden Wälzlager und gleichzeitig auch die Anschlaghülse zwischen diesen Spannflächen eingespannt sind.

In einer vorteilhaften Weiterbildung kann die äußere Lagerbuchse in die Anschlaghülse eingeklebt oder eingepresst sein. In einer vorteilhaften Weiterbildung kann die innere Lagerbuchse auf die Schafthülse aufgeklebt oder aufgepresst sein. Somit kann die Lage der Anschlaghülse gegenüber der äußeren Lagerbuchse bzw. Lage der Schafthülse gegenüber der inneren Lagerbuchse durch eine Klebe- oder Pressverbindung festgelegt werden. Als Klebstoff kann ein Metallkleber verwendet werden, eine Pressverbindung kann vorteilhafterweise als thermische Schrumpfverbindung ausgebildet sein.

In einer vorteilhaften Weiterbildung kann der Anschlag eine Arretiermutter, insbesondere eine Rändelmutter umfassen, die auf einem Verstellgewinde des Werkzeugschafts aufschraubbar ist, und die zur konternden Arretierung der Schafthülse ausgelegt ist. Die Arretiermutter kann eine Konterarretierung der Schafthülse auf dem Werkzeugschaft bewirken, insbesondere wenn die Schafthülse zumindest partiell mittels einer Schraubverbindung am Werkzeugschaft aufgeschraubt ist, so dass eine Anschlagtiefe fixiert werden kann und ein unbeabsichtigtes Verändern der Anschlagtiefe verhindert wird. Somit können eine hohe Anzahl von Senk- oder Fräsbearbeitungen mit gleichem Tiefenanschlag selbst bei einer rauen Handhabung des Werkzeugs mit gleichem Arbeitsergebnis vorgenommen werden.

Sofern eine Arretiermutter vorhanden ist, ist weiterhin denkbar, dass die Arretiermutter eine Feststellschraube umfasst, mit der die Axialposition der Arretiermutter auf dem Werkzeugschaft fixierbar ist. Die Feststellschraube kann beispielsweise, radial in der Arretiermutter ausgerichtet, in eine Vertiefung des Werkzeugschafts eingreifen oder die Arretiermutter gegen den Schaft verklemmen, und somit die Drehposition der Arretiermutter auf dem Werkzeugschaft fixieren.

In einem nebengeordneten Aspekt wird ein Bohr-, Fräs- oder Senkwerkzeug mit einem Werkzeugschaft vorgeschlagen, wobei am Werkzeugschaft ein Anschlag nach einer der vorgenannten Ausführungsformen befestigt ist. Ein derartiges Werkzeug kann grundsätzlich aus einem Bohr-, Fräs- oder Senkwerkzeug nach dem Stand der Technik, kombiniert mit einem oben dargestellten Anschlag, ausgebildet sein. Die Befestigung der Schafthülse am Werkzeugschaft kann grundsätzlich beliebig erfolgen, beispielsweise kann am Werkzeugschaft ein Außengewinde vorgesehen sein, worauf ein Innengewinde der Schafthülse aufgeschraubt werden kann, oder die Innenoberfläche der Schafthülse wird mit einer Außenfläche des Werkzeugschafts verklebt.

In einer vorteilhaften Weiterbildung des Werkzeugs kann die Schafthülse auf dem Werkzeugschaft, welcher insbesondere gewindefrei sein kann, aufgeklebt, aufgepresst oder aufgeklemmt sein. Jedes beliebige spanabhebende Drehwerkzeug lässt sich mit dem Anschlag nachrüsten. Somit kann die Schafthülse mittels eines Klebstoffs, insbesondere eines Metallklebers, beispielsweise mittels eines Zweikomponenten-Metallklebers wie einem 2K-Epoxidharzklebstoff oder 2K-Acrylatkleber mit dem Schaft verklebt werden. Hierbei kann eine beliebige Einstellposition der Schafthülse am Werkzeugschaft sehr einfach eingestellt und der Kleber ausgehärtet werden, wobei eine einfache und kostengünstige Befestigung des Anschlags an einem Werkzeug erreicht werden kann. Auch ist eine Befestigung mittels thermischer Schrumpfpassung denkbar, wobei eine erwärmte, aufgeweitete Schafthülse auf einen Werkzeugschaft aufgebracht und an einer gewünschten Position abgekühlt wird, um eine kraftschlüssige Verbindung bereitzustellen.

Alternativ kann der Werkzeugschaft ein Verstellgewinde aufweisen, auf welches die Schafthülse und eine zur konternden Arretierung der Schafthülse ausgelegte Arretiermutter, insbesondere eine Rändelmutter, aufgeschraubt sein. Dadurch ist der Anschlag wechselbar. Der Anschlag kann beispielsweise als Set mit einer Mehrzahl von verschiedenen Bohr-, Fräs- oder Senkwerkzeugen angeboten werden. Der Anschlag kann einzeln oder in Kombination mit einem oder mehreren Rotationswerkzeugen angeboten werden. In dem Set können eine oder mehrere Adapterbuchsen zum Anpassen an verschiedene Schaftdurchmesser von Werkzeugen enthalten sein. Bohr-, Fräs- oder Senkwerkzeuge weisen je nach Einsatztyp unterschiedliche Radien des Werkzeugschafts auf.

In vorteilhafter Weise kann die Arretiermutter einen Werkzeug-Gewindeschaft oder einen Werkzeug-Schnellwechselschaft umfassen. Somit kann die Arretiermutter gleichzeitig den Richtung Spannfutter bildenden Abschluss des Werkzeugs bilden, und eine Schaftaufnahme beispielsweise als Werkzeuggewinde zum Einschrauben in ein Spannfutter oder einen Schnellwechselschaft, beispielsweise einen sogenannten Clickchange-Schaft umfassen. Das Senkwerkzeug ist im Anschlag aufgenommen und fixiert und der Anschlag verbindet das Senkwerkzeug mit dem Spannfutter. Hierdurch kann ein Werkzeug durch Aufnahme in den Anschlag in verschiedenartigen Spannfuttern eingespannt werden.

Letztlich kann die Schafthülse auch mittels Klemmverbindung, beispielsweise durch ein klemmendes Aufweiten oder eine Klemmschelle, Klemmschraube oder ähnliches am Werkzeugschaft befestigt werden. Die Anschlagtiefe wird durch die axiale Position der Schafthülse auf dem Werkzeugschaft definiert.

In einer bevorzugten Ausführungsform kann die Schafthülse im axial von der Anschlaghülse gegenüberliegenden Bohrschaftendbereich zumindest eine, insbesondere zwei oder mehrere, radial wirkende Verspannmittel umfassen, mittels derer die Schafthülse drehfest und axial fixierend mit dem Werkzeugschaft verspannbar ist. Durch eine verspannende Befestigung kann eine schnelle Lösbarkeit des Anschlags vom Bohrschaft erreicht und somit ein schnelles Auswechseln oder eine Verstellung der Anschlagstiefe ermöglicht werden. Des Weiteren können durch ein Verspannmittel, beispielsweise eine Klemme oder eine Spannschraube, auf zusätzliche Befestigungselemente am Werkzeugschaft wie Gewinde verzichtet werden. Somit können Standardfräs-, -bohr-, oder -senkwerkzeuge mit einem Anschlag nachgerüstet werden, an denen der Anschlag verspannend befestigt werden kann.

Als Verspannmittel kann in einer bevorzugten Ausführungsform eine oder mehrere Verspannschrauben, insbesondere Inbusschrauben eingesetzt werden, die bevorzugt in radial ausgerichtete Eingriffsvertiefungen oder Fixiergewinde des Werkzeugschafts drehfest und axial arretierend eingreifen können. Durch Verspannschrauben, insbesondere Inbusschrauben, kann die Schafthülse am Werkzeugschaft an einer beliebigen Position befestigt werden. Sind am Werkzeugschaft Eingriffsvertiefungen, beispielsweise Senkvertiefungen, angeordnet, so können die Inbusschrauben in diese Vertiefungen eingreifen, wobei hierdurch die Schafthülse an einer definierten Stelle des Werkzeugschafts drehfest befestigt wird. Alternativ können im Werkzeugschaft radial ausgerichtete Fixiergewinde angeordnet sein, so dass Maden- oder Inbusschrauben in das Fixiergewinde eingeschraubt werden können, um die Schafthülse am Werkzeugschaft zu befestigen. Die Befestigung des Anschlags an eine hierfür besonders hergerichtete Stelle des Werkzeugschafts hat den Vorteil, dass eine einmal eingestellte Anschlagtiefe auch beim Wechseln des Werkzeugs beibehalten werden kann. Inbusschrauben lassen sich einfach lösen und anziehen, so dass ein schnelles Wechseln des Werkzeugs ermöglicht wird. Durch ein Verspannen der Schafthülse können beliebige Anschlagtiefen des Werkzeugs eingestellt werden.

Um einen Anschlag an verschiedene Werkzeugschaftdurchmesser anzupassen, kann es vorteilhaft sein, dass eine oder mehrere Adapterbuchsen vorgesehen sind, die in die Schafthülse einsteckbar sind, um den Innendurchmesser der Schafthülse an einen variierenden Werkzeugschaftdurchmesser anpassen zu können. Somit kann mit einem Anschlag und mehreren Adapterbuchsen eine Vielzahl von Werkzeugen mit unterschiedlichen Schaftdurchmessern mit einem gleichen Anschlag versehen werden, so dass ein universell auswechselbarer Anschlag vorgeschlagen wird, der auf beliebige Werkzeuge aufgesteckt, verklebt, oder und an diesen klemmend befestigt werden kann. Dies senkt die Anschaffungskosten und erweitert den Einsatzbereich des Anschlags für eine Vielzahl unterschiedlicher Anwendungen. Es ist denkbar, ein Set mit einem Anschlag und einem oder mehreren Adapterbuchsen zu konfektionieren.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine Schnittdarstellung durch einen Anschlag gemäß dem Stand der Technik mit Seitendarstellung eines hierzu verwendbaren Werkzeugs; und
- **Fig. 2**: in einer Schnittdarstellung eine Ausführungsform eines erfindungsgemäßen, an einem Werkzeug angeordneten Anschlags.

In den Figuren sind gleiche oder gleichartige Komponenten mit gleichen Bezugszeichen beziffert.

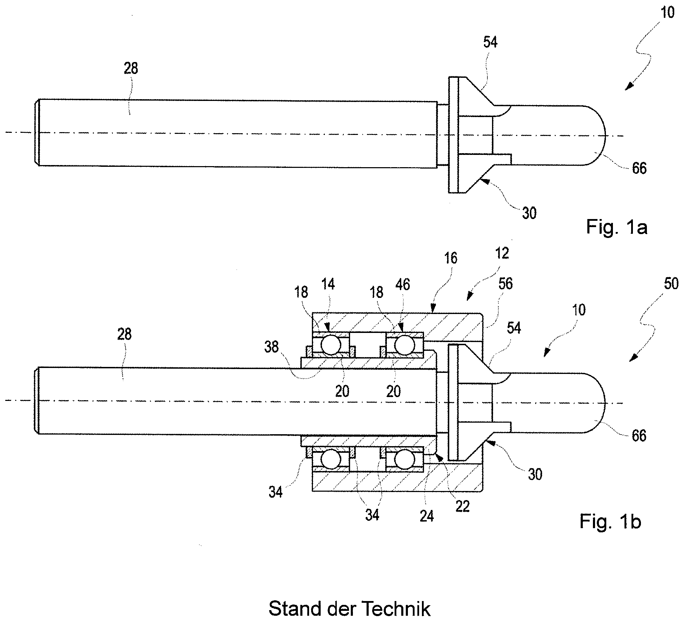

Die Fig. 1 zeigt ein Anschlag-Entgratungswerkzeug 50 gemäß dem Stand der Technik. Ein in Fig. 1a dargestelltes Senkwerkzeug oder Werkzeug 10 umfasst einen Werkzeugschaft 28 und einen Werkzeugkopf 30, der einen abgerundeten Einführzapfen 66 und eine Mehrzahl von Entgratungs- bzw. Senkschneiden 54 aufweist.

Ein an dem Werkzeug 10 befestigter Anschlag 12 umfasst, wie in Fig. 1b dargestellt, eine Anschlaghülse 16, die mittels eines ersten und eines zweiten Radialkugellagers 14, 46 frei drehbar um eine Schafthülse 22 gelagert ist. Die Schafthülse 22 kann axial auf den Werkzeugschaft 28 bis zum Werkzeugkopf 30 aufgeschoben und an einer axialen Stelle des Schafts 28, die die Anschlagtiefe des Werkzeugkopfs 30 definiert, mittels einer Klebeverbindung 38 am Schaft 28 drehfest kraftschlüssig verbunden werden.

Die äußeren Lagerbuchsen 18 des ersten und zweiten Radialkugellagers 14, 46 sind in der Innenwandung der Anschlaghülse 16 eingeklebt. Die innere Lagerbuchse 20 des ersten Radialkugellagers 14 ist auf der Schafthülse 22 mittels zweier Lagerringe 34 fixiert und kann gleichwohl auf der Schafthülse 22 aufgeklebt sein. Die innere Lagerbuchse 20 des zweiten Kugellagers 46 ist durch einen Gegenlagerring 24 der Schafthülse 22 und einem Lagerring 34 arretiert. Die Anschlaghülse 16 kann sich über die beiden Radialkugellager 14, 46 gegenüber der Schafthülse 22 verdrehen.

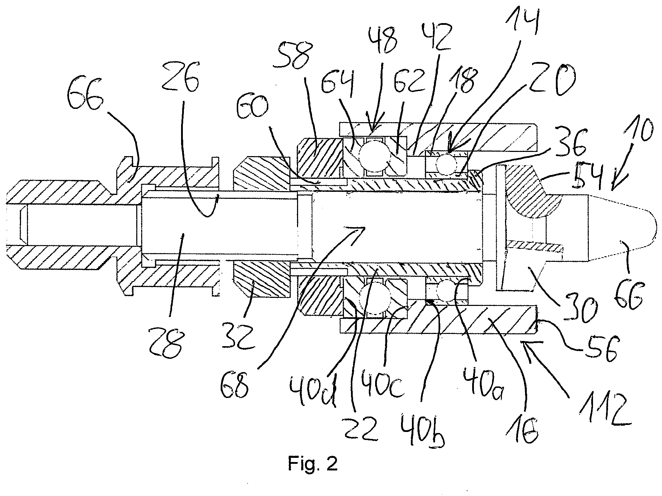

In der Fig. 2 ist eine Ausführungsform eines Anschlags 112 gemäß der vorliegenden Erfindung dargestellt, welcher an einem im Ausführungsbeispiel als Senkwerkzeug ausgestalteten Werkzeug 10 angeordnet ist. Es versteht sich, dass das Werkzeug auch als Bohr- oder Fräswerkzeug ausgestaltet sein kann.

Das Werkzeug 10 weist auf seinem Werkzeugschaft 28 ein Verstellgewinde 26 auf, welches in ein Spannfutter 66 einer Drehmaschine oder einer Bohrmaschine eingespannt werden kann.

Der Anschlag 112 umfasst eine Anschlaghülse 16, die mittels eines Radialkugellagers 14 und eines Axialkugellagers 48 frei drehbar um eine Schafthülse 22 gelagert ist. Ein Innengewindeabschnitt der Schafthülse 22 ist zumindest bereichsweise auf dem Verstellgewinde 26 aufgeschraubt, um eine axiale Position des Anschlags 112 auf dem Werkzeugschaft 28 zu definieren. Auf dem Verstellgewinde 26 ist eine Arretiermutter 32 aufgeschraubt, die die Schafthülse 22 drehfest kontert. Durch Wahl einer geeigneten Längsposition von Schafthülse 22 und Arretiermutter 32 kann die Eintauchtiefe des Werkzeugs 10 in ein zu bearbeitendes Werkstück eingestellt werden.

Alternativ ist denkbar, dass der Anschlag 112 über den Werkzeugschaft 28 und das Verstellgewinde 26 hinweg auf einen Schafthülsen-Aufnahmebereich 68 des Werkzeugschafts 28 in den Bereich des Werkzeugkopfs 30 geschoben und im Schafthülsen-Aufnahmebereich 68 verklebt oder mittels der Arretiermutter 32 gegen einen Anschlag verspannt werden kann. Der Schafthülsen-Aufnahmebereich 68 kann eine Oberflächenkontur zur drehfesten Arretierung der Schafthülse 22, beispielsweise Längsriefen, aufweisen.

Die Schafthülse 22 weist einen Kragen 36 auf, an dem eine Spannfläche 40a für die innere Lagerbuchse 20 vorgesehen ist. An der Innenseite der Anschlaghülse 16 ist ein mehrstufiger Absatz 42 ausgebildet, an dem eine Spannfläche 40b für die äußere Lagerbuchse 18 und axial gegenüberliegend eine Spannfläche 40c für eine Gehäusescheibe 62 des Axialkugellagers 48 vorgesehen ist.

Die Schafthülse 22 weist an einem dem Werkzeugkopf 30 abgewandten axialen Ende ein Lagerspanngewinde 60 auf. Auf dem Lagerspanngewinde 60 ist eine Lagerspannmutter 58 aufgeschraubt, welche eine Spannfläche 40d für eine Wellenscheibe 64 des Axialkugellagers 48 aufweist.

Die Spannflächen 40a - 40d wirken in axialer Richtung, so dass die beiden Kugellager 14, 48 und gleichzeitig auch die Anschlaghülse 16 zwischen diesen Spannflächen 40a - 40d eingespannt sind. Zusätzlich können die äußere Lagerbuchse 18 und/oder der Gehäusering 62 mit der Anschlaghülse 16 und/oder die innere Lagerbuchse 20 mit der Schafthülse 22 verklebt sein. Durch ein Verdrehen der Lagerspannmutter 58 gegen die Schafthülse 22 kann ein axiales Spiel der Anschlaghülse 16 gegenüber der Schafthülse 22 sowie ein Lagerdrehmoment der Kugellager 14, 48 eingestellt werden.

Die Anschlaghülse 16 kann sich über die beiden Kugellager 14, 48 gegenüber der Schafthülse 22 verdrehen.

Insbesondere im Flugzeugbau müssen eine Vielzahl gleichartiger Senkvertiefungen mittels handgehaltener Senkwerkzeuge hergestellt werden. Insbesondere werden Vertiefungen händisch entgratet. Ein Werker führt den Zapfen des Entgranungssenkers ein und senkt den Anschlag auf das Bauteil, bis der Anschlag aufsitzt und stillsteht, d.h. sich gegenüber dem drehenden Entgratungswerkzeug nicht bewegt. Hierdurch wird die umliegende Oberfläche um eine Bohrstelle geschützt und nicht verkratzt und der Werker kann eine definierte Senktiefe bzw. Entgratungsqualität erreichen. Das Entgratungswerkzeug kann eine Spanfase oder einen Spanradius aufweisen.

Mittels eines Anschlags 112 können eine Vielzahl verschiedener Werkzeuge 10 mit einem Anschlag nachgerüstet werden, wobei durch ein direktes Antreiben des Werkzeugschafts 28 keine Fehlstellung und kein unrunder Lauf des Werkzeugkopfes 30 auftreten kann und bei Verschleiß lediglich das Werkzeug 10 gewechselt und derselbe Anschlag 112 für eine Vielzahl von Werkzeugen 10 verwendet werden kann. Mittels Adapterhülsen kann der Anschlag 112 an verschiedene Durchmesser eines Werkzeugschafts 28 angepasst werden. Das Werkzeug 10 wird direkt mit einem Spannfutter einer Dreh- oder Bohrmaschine verspannt und der Tiefenanschlag kann durch eine axiale Position der Schafthülse 22 auf dem Werkzeugschaft 28 leicht eingestellt werden.

Die Anschlaghülse 16 weist an ihrem axialen Ende einen stirnseitigen Anschlagring 56 auf, der bei Erreichen des Tiefenanschlags auf der Oberfläche eines zu bearbeitenden Bauteils aufsitzt, wobei sich das Werkzeug 10 weiter frei drehen kann, da es mit der Anschlaghülse 16 durch die beiden Kugellager 14, 48 frei drehbar verbunden ist. Durch die Verwendung des Axialkugellagers 48 werden beim Aufsetzen der Anschlaghülse 16 entstehende axiale Kräfte spielfrei abgefangen. Eine axiale Verschiebung zwischen der Anschlaghülse 16 und der Schafthülse 22 wird nahezu vollständig vermieden, so dass eine vorgegebene Eintauchtiefe des Werkzeugs unabhängig von einer durch den Werker ausgeübten Anpresskraft präzise eingehalten werden kann.

### Bezugszeichenliste

- 10: Werkzeug
- 12: Anschlag gemäß dem Stand der Technik
- 14: erstes Radialkugellager
- 16: Anschlaghülse
- 18: äußere Lagerbuchse
- 20: innere Lagerbuchse
- 22: Schafthülse
- 24: Gegenlagerring
- 26: Verstellgewinde
- 28: Werkzeugschaft
- 30: Werkzeug kopf
- 32: Arretiermutter
- 34: Lagerring
- 36: Kragen
- 38: Klebeverbindung
- 40a-d: Spannfläche
- 42: Absatz
- 46: zweites Radialkugellager
- 48: Axialkugellager
- 50: Anschlag-Entgratungswerkzeug gemäß dem Stand der Technik
- 54: Schneide
- 56: Anschlagring
- 58: Lagerspannmutter
- 60: Lagerspanngewinde
- 62: Gehäusescheibe
- 64: Wellenscheibe
- 66: Spannfutter
- 68: Schafthülsen-Aufnahmebereich des Werkzeugschafts
- 112: Anschlag

## Patentansprüche

1. Anschlag (112) für ein rotierendes Bohr-, Fräs- oder Senkwerkzeug (10) umfassend eine mit einem Radialwälzlager (14) im eingebauten Zustand um das Werkzeug (10) frei drehbar gekoppelte Anschlaghülse (16), wobei eine äußere Lagerbuchse (18) des Radialwälzlagers (14) an der Anschlaghülse (16) und eine innere Lagerbuchse (20) des Radialwälzlagers (14) an einer Schafthülse (22), welche auf einem Werkzeugschaft (28) des Werkzeugs (10) befestigbar ist, befestigt sind, **dadurch gekennzeichnet, dass** zusätzlich ein Axialwälzlager (48) vorgesehen ist, wobei eine Gehäusescheibe (62) des Axialwälzlagers (48) an der Anschlaghülse (16) und eine Wellenscheibe (64) des Axialwälzlagers (48) an der Schafthülse (22) abgestützt ist.

2. Anschlag (112) nach einem der vorhergehenden Ansprüche, **dadurch gekennzeichnet, dass** das Axialwälzlager (48) axial versetzt zu dem Radialwälzlager (14) angeordnet ist.

3. Anschlag (112) nach Anspruch 2, **dadurch gekennzeichnet, dass** das Axialwälzlager (48) in axialer Richtung betrachtet auf der einem Werkzeugkopf (30) des Werkzeugs (10) abgewandten Seite des Radialwälzlagers (14) angeordnet ist.

4. Anschlag (112) nach einem der vorhergehenden Ansprüche, **dadurch gekennzeichnet, dass** auf einem Lagerspanngewinde (60) der Schafthülse (22) eine Lagerspannschraube (58) angeordnet ist, wobei das Radialwälzlager (14) und das Axialwälzlager (48) derart angeordnet sind, dass durch ein Verstellen der Lagerspannschraube (58) beide Wälzlager (14, 48) gemeinsam verspannt werden können.

5. Anschlag (112) nach Anspruch 4, **dadurch gekennzeichnet, dass** die Anschlaghülse (16) eine axial wirkende Spannfläche (40c) für die Gehäusescheibe (62) und die Lagerspannschraube (58) eine axial wirkende Spannfläche (40d) für die Wellenscheibe (64) aufweisen, wobei beide Spannflächen (40c, 40d) einander zugewandt sind.

6. Anschlag (112) nach einem der vorhergehenden Ansprüche, **dadurch gekennzeichnet, dass** die Anschlaghülse (16) eine axial wirkende Spannfläche (40b) für die äußere Lagerbuchse (18) und die Schafthülse (22) eine axial wirkende Spannfläche (40a) für die innere Lagerbuchse (20) aufweisen, wobei beide Spannflächen (40a, 40b) einander zugewandt sind.

7. Anschlag (112) nach einem der vorhergehenden Ansprüche, **dadurch gekennzeichnet, dass** die äußere Lagerbuche (18) in die Anschlaghülse (16) eingeklebt oder eingepresst ist.

8. Anschlag (112) nach einem der vorhergehenden Ansprüche, **dadurch gekennzeichnet, dass** die innere Lagerbuche (20) auf die Schafthülse (22) aufgeklebt oder aufgepresst ist.

9. Bohr-, Fräs- oder Senkwerkzeug mit einem Werkzeugschaft (28), **dadurch gekennzeichnet, dass** an dem Werkzeugschaft (28) ein Anschlag (112) nach einem der vorhergehenden Ansprüche befestigt ist.

10. Werkzeug (10) nach Anspruch 9, **dadurch gekennzeichnet, dass** die Schafthülse (22) auf dem Werkzeugschaft (28) aufgeklebt, aufgepresst oder aufgeklemmt ist.

11. Werkzeug (10) nach Anspruch 9, **dadurch gekennzeichnet, dass** der Werkzeugschaft (28) ein Verstellgewinde (26) aufweist, auf welches die Schafthülse (22) und eine zur konternden Arretierung der Schafthülse (22) ausgelegte Arretiermutter (32), insbesondere eine Rändelmutter, aufgeschraubt ist.

## Claims

1. Stop (112) for a rotating drilling, milling or countersinking tool (10), comprising a stop sleeve (16) coupled to a radial rolling bearing (14), in the installed state, so as to be freely rotatable about the tool (10), wherein an outer bearing bush (18) of the radial rolling bearing (14) is fastened to the stop sleeve (16) and an inner bearing bush (20) of the radial rolling bearing (14) is fastened on a shank sleeve (22), which can be fastened on a tool shank (28) of the tool (10), **characterized in that** an axial rolling bearing (48) is additionally provided, wherein a housing washer (62) of the axial rolling bearing (48) is supported on the stop sleeve (16) and a shaft washer (64) of the axial rolling bearing (48) is supported on the shank sleeve (22).

2. Stop (112) according to one of the preceding claims, **characterized in that** the axial rolling bearing (48) is arranged axially offset from the radial rolling bearing (14).

3. Stop (112) according to claim 2, **characterized in that** the axial rolling bearing (48), as viewed in the axial direction, is arranged on the side of the radial rolling bearing (14) facing away from a tool head (30) of the tool (10).

4. Stop (112) according to one of the preceding claims, **characterized in that** a bearing tensioning screw (58) is arranged on a bearing tensioning thread (60) of the shank sleeve (22), wherein the radial rolling bearing (14) and the axial rolling bearing (48) are arranged in such a way that both rolling bearings (14, 48) can be tensioned together by adjusting the bearing tensioning screw (58).

5. Stop (112) according to claim 4, **characterized in that** the stop sleeve (16) has an axially acting tensioning surface (40c) for the housing washer (62) and the bearing tensioning screw (58) has an axially acting tensioning surface (40d) for the shaft washer (64), wherein both tensioning surfaces (40c, 40d) are facing each other.

6. Stop (112) according to one of the preceding claims, **characterized in that** the stop sleeve (16) has an axially acting tensioning surface (40b) for the outer bearing bush (18) and the shank sleeve (22) has an axially acting tensioning surface (40a) for the inner bearing bush (20), wherein both tensioning surfaces (40a, 40b) are facing each other.

7. Stop (112) according to one of the preceding claims, **characterized in that** the outer bearing bush (18) is adhesively bonded or press-fitted into the stop sleeve (16).

8. Stop (112) according to one of the preceding claims, **characterized in that** the inner bearing bush (20) is adhesively bonded or press-fitted onto the shank sleeve (22).

9. Drilling, milling or countersinking tool with a tool shank (28), **characterized in that** a stop (112) according to one of the preceding claims is fastened to the tool shank (28).

10. Tool (10) according to claim 9, **characterized in that** the shank sleeve (22) is adhesively bonded, press-fitted or clamped onto the tool shank (28).

11. Tool (10) according to claim 9, **characterized in that** the tool shank (28) has an adjusting thread (26) having screwed thereon the shank sleeve (22) and a locking nut (32), in particular a knurled nut, being designed for counter-locking of the shank sleeve (22).

## Revendications

1. Butée (112) pour un outil rotatif de perçage, de fraisage ou de fraisurage (10), comprenant une douille de butée (16) couplée à un palier à roulement radial (14), à l'état monté, de manière à pouvoir tourner librement autour de l'outil (10), dans laquelle un coussinet extérieur (18) du palier à roulement radial (14) est fixé à la douille de butée (16) et un coussinet intérieur (20) du palier à roulement radial (14) est fixé à une douille de tige (22), qui peut être fixé sur une tige d'outil (28) de l'outil (10), **caractérisée en ce qu'il** est prévu en outre un palier à roulement axial (48), une rondelle-logement (62) du palier à roulement axial (48) s'appuyant sur la douille de butée (16) et une rondelle-arbre (64) du palier à roulement axial (48) s'appuyant sur la douille de tige (22).

2. Butée (112) selon l'une des revendications précédentes, **caractérisée en ce que** le palier à roulement axial (48) est disposé de manière décalée axialement par rapport au palier à roulement radial (14).

3. Butée (112) selon la revendication 2, **caractérisée en ce que** le palier à roulement axial (48), vu dans la direction axiale, est disposé sur le côté du palier à roulement radial (14) détourné de la tête d'outil (30) de l'outil (10).

4. Butée (112) selon l'une des revendications précédentes, **caractérisée en ce qu'**une vis de tension de palier (58) est disposée sur un filetage de tension de palier (60) de la douille de tige (22), le palier à roulement radial (14) et le palier à roulement axial (48) étant disposés de telle sorte que les deux paliers à roulement (14, 48) peuvent être tendus l'une contre l'autre en réglant la vis de tension de palier (58).

5. Butée (112) selon la revendication 4, **caractérisée en ce que** la douille de butée (16) présente une surface de tension (40c) à action axiale pour la rondelle-logement (62) et la vis de tension de palier (58) présente une surface de tension (40d) à action axiale pour la rondelle-arbre (64), les deux surfaces de tension (40c, 40d) étant tournées l'une vers l'autre.

6. Butée (112) selon l'une des revendications précédentes, **caractérisée en ce que** la douille de butée (16) présente une surface de tension (40b) à action axiale pour le coussinet extérieur (18) et la douille de tige (22) présente une surface de tension (40a) à action axiale pour le coussinet intérieur (20), les deux surfaces de tension (40a, 40b) étant tournées l'une vers l'autre.

7. Butée (112) selon l'une des revendications précédentes, **caractérisée en ce que** le coussinet extérieur (18) est collé par adhérence ou ajusté par pression dans la douille de butée (16).

8. Butée (112) selon l'une des revendications précédentes, **caractérisée en ce que** le coussinet intérieur (20) est collé par adhérence ou ajusté par pression sur la douille de tige (22).

9. Outil de perçage, de fraisage ou de fraisurage avec une tige d'outil (28), **caractérisé en ce qu'**une butée (112) selon l'une des revendications précédentes est fixée à la tige d'outil (28).

10. Outil (10) selon la revendication 9, **caractérisé en ce que** la douille de tige (22) est collée par adhérence, ajustée par pression ou fixée par serrage sur la tige d'outil (28).

11. Outil (10) selon la revendication 9, **caractérisé en ce que** la tige d'outil (28) présente un filetage de réglage (26) sur lequel est vissée la douille de tige (22) et un écrou de blocage (32), en particulier un écrou moleté, conçu pour le contre-blocage de la douille de tige (22).
